(19) Europäisches Patentamt / European Patent Office / Office européen des brevets

(11) **EP 3 780 585 A1**

(12) **EUROPEAN PATENT APPLICATION**
published in accordance with Art. 153(4) EPC

(43) Date of publication:
**17.02.2021 Bulletin 2021/07**

(51) Int Cl.:
*H04N 5/74* *(2006.01)*    *G03B 21/14* *(2006.01)*
*G09G 5/00* *(2006.01)*    *G09G 5/10* *(2006.01)*

(21) Application number: **19774697.7**

(22) Date of filing: **16.01.2019**

(86) International application number:
**PCT/JP2019/001067**

(87) International publication number:
**WO 2019/187511 (03.10.2019 Gazette 2019/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2018 JP 2018064442**

(71) Applicant: **Sony Corporation**
**108-0075 Tokyo (JP)**

(72) Inventor: **TAKAHASHI, Noriaki**
**Tokyo 108-0075 (JP)**

(74) Representative: **D Young & Co LLP**
**120 Holborn**
**London EC1N 2DY (GB)**

(54) **SIGNAL PROCESSING DEVICE, INFORMATION PROCESSING METHOD, AND PROGRAM**

(57) The luminance of a projected picture derived from an input picture is optimized in a manner suppressing the reduction of contrast in the projected picture.

A signal processing apparatus includes a compensation coefficient application section configured to apply a posterior degradation compensation coefficient to a picture input signal input to a picture projection section, the posterior degradation compensation coefficient being based on scattered light caused by the picture projection section in a picture projected by the picture projection section.

F I G . 10

EP 3 780 585 A1

**Description**

[Technical Field]

The present technology relates to the technical field of signal processing apparatuses, information processing methods, and programs. More particularly, the technology relates to a signal processing apparatus, an information processing method, and a program for applying an appropriate picture filter to a picture input signal.

[Background Art]

With the picture projection apparatus such as a projector, there may be cases where the contrast of a picture projected to a screen becomes lower than that of an input picture. Such a reduction of contrast may be incurred not only by the conditions of the screen but also by the scattering of light inside the picture projection apparatus.
Proposals have been made to reduce the reduction of contrast. For example, PTL 1 discloses techniques for extending gradations based on simple features such as an average or the standard deviation of an entire picture in carrying out qualitative correction.

[Citation List]

[Patent Literature]

[PTL 1] Japanese Patent Laid-Open No. 2004-032207

[Summary]

[Technical Problem]

However, the method described in PTL 1 does not involve optimizing the projected picture with respect to the input picture. That means the projected picture may not have the same luminance as the input picture. There is a possibility that a picture different from the intended picture may be projected.
Thus, the signal processing apparatus, the picture processing method, and the program according to the present technology are aimed at optimizing the luminance of the projected picture with respect to the input picture and thereby suppressing the reduction of contrast in the projected picture.

[Solution to Problems]

According to the present technology, there is provided a signal processing apparatus including a compensation coefficient application section configured to apply a posterior degradation compensation coefficient to a picture input signal input to a picture projection section, the posterior degradation compensation coefficient being based on scattered light caused by the picture projection section in a picture projected by the picture projection section.
Thus, the projected picture having been compensated is given an appropriate contrast.
The signal processing apparatus above may further include a compensation coefficient selection section configured to select the posterior degradation compensation coefficient applied by the compensation coefficient application section in accordance with the positions of lenses provided in the picture projection section, the lens positions determining a zoom mode, a shift mode, and a focus mode with respect to the projected picture.
Thus, the posterior degradation compensation coefficient corresponding to the lens position is acquired and applied.
In the signal processing apparatus above, the compensation coefficient selection section may select a posterior degradation compensation coefficient calculated using a plurality of the posterior degradation compensation coefficients established in accordance with the lens positions.
Thus, there is no need for a configuration capable of acquiring the posterior degradation compensation coefficients corresponding to all lens position.
The signal processing apparatus above may further include a storage section configured to store the posterior degradation compensation coefficient.
Thus, the appropriate posterior degradation compensation coefficient is acquired from the storage section.
The signal processing apparatus above may further include a test pattern generation section configured to generate a test pattern for calculating the posterior degradation compensation coefficient.
Thus, there is no need to acquire test patterns from the outside.

In the signal processing apparatus above, the test pattern may be a picture pattern in which only one pixel is lit.

Thus, it is possible to perform the work of projecting a picture pattern in which only one pixel is lit as many times as the number of pixels involved, the lit pixel being changed every time.

In the signal processing apparatus above, the test pattern may be a picture pattern in which a predetermined proportion of pixels are lit in the projected picture starting from an outer circumference of the projected picture.

This type of test pattern is used to simplify the processing involved.

In the signal processing apparatus above, the compensation coefficient application section may apply the posterior degradation compensation coefficient calculated using a linear first approximation equation based on a distance between a scatter source pixel originating the scattered light and a scatter destination pixel affected by the scattered light.

This type of linear first approximation equation is used to simplify the processing involved.

In the signal processing apparatus above, the compensation coefficient application section may apply the posterior degradation compensation coefficient calculated by measuring a luminance value of a specific region instead of the posterior degradation compensation coefficient calculated by measuring luminance values of all pixels included in the projected picture.

This type of measuring method is used to simplify the processing involved.

In the signal processing apparatus above, the compensation coefficient application section may divide one frame of the picture input signal into units of a sub-region including a plurality of pixels in the projected picture, the compensation coefficient application section further applying the corresponding posterior degradation compensation coefficient to each of the sub-regions.

This type of method is used to simplify the processing involved.

The signal processing apparatus above may further include the picture projection section that functions as a projector apparatus.

Equipped with the picture projection section that functions as a projector apparatus, the signal processing apparatus allows the projector apparatus to internally perform a process of generating a corrected picture input signal at the time of picture projection.

In the signal processing apparatus above, in a case where X stands for the picture input signal and H(X) denotes a transfer function of the projected picture, an inverse function of the transfer function H(X) may be used as a posterior degradation compensation function whose elements are the posterior degradation compensation coefficients.

Thus, it is possible to appropriately set the posterior degradation compensation function for compensating the reduction of contrast in the projected picture derived from the picture input signal.

The signal processing apparatus above may further include a coefficient acquisition section configured to acquire the posterior degradation compensation coefficient.

This enables the signal processing apparatus to acquire the posterior degradation compensation coefficient at a desired timing.

According to the present technology, there is provided an information processing method including causing an information processing apparatus to perform a compensation coefficient application procedure that applies a posterior degradation compensation coefficient to a picture input signal input to a picture projection section, the posterior degradation compensation coefficient being based on scattered light caused by the picture projection section in a picture projected by the picture projection section.

According to the present technology, there is provided a program for causing an information processing apparatus to perform processes corresponding to the coefficient acquisition procedure and to the compensation coefficient application procedure described above.

This makes it possible to optimize the luminance of the projected picture with respect to the input image and to suppress the reduction of contrast in the projected picture.

[Advantageous Effect of Invention]

According to the present technology, it is possible to optimize the luminance of the projected picture with respect to the input picture and thereby to suppress the reduction of contrast in the projected picture.

It is to be noted that the advantageous effect outlined above is not limitative of the present disclosure. Further, advantages will become apparent from a reading of the present disclosure.

[Brief Description of Drawings]

[FIG. 1]

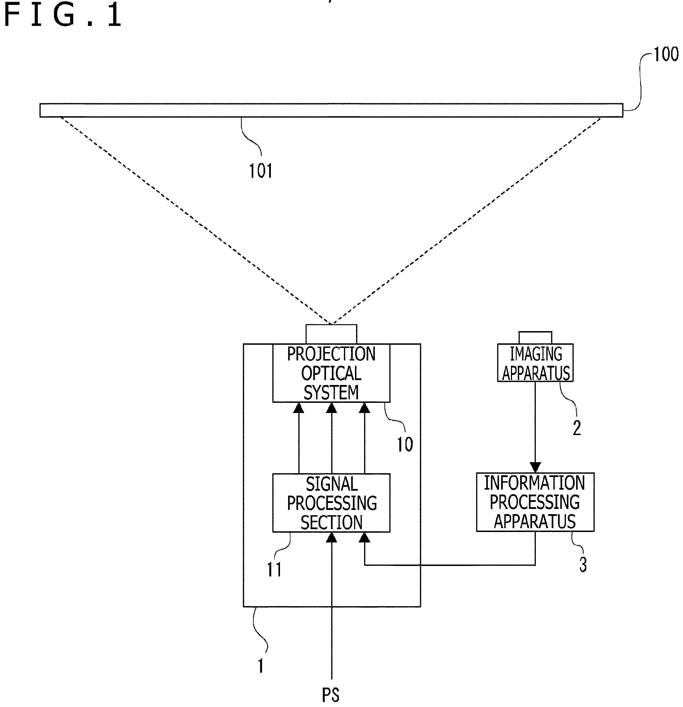

FIG. 1 is a block diagram of a picture projection system embodying the present technology.

[FIG. 2]

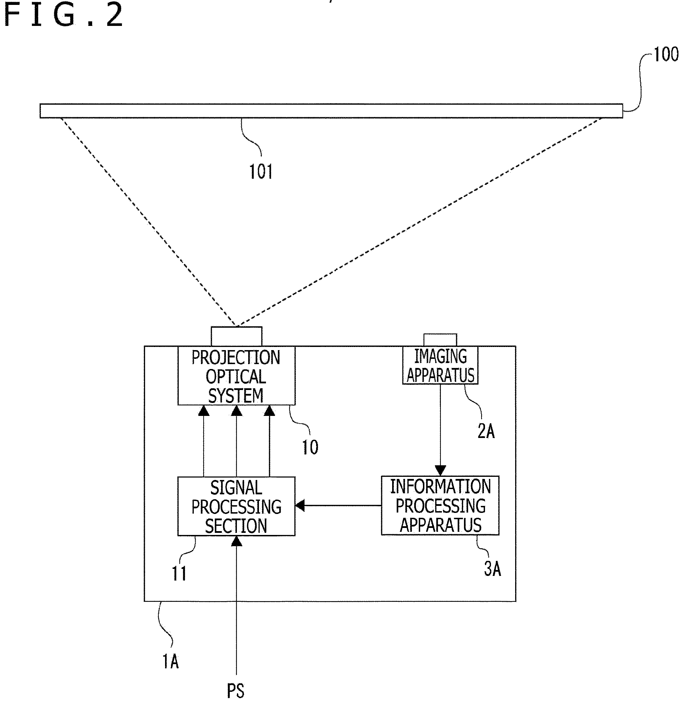

FIG. 2 is a block diagram of another picture projection system embodying the present technology.
[FIG. 3]

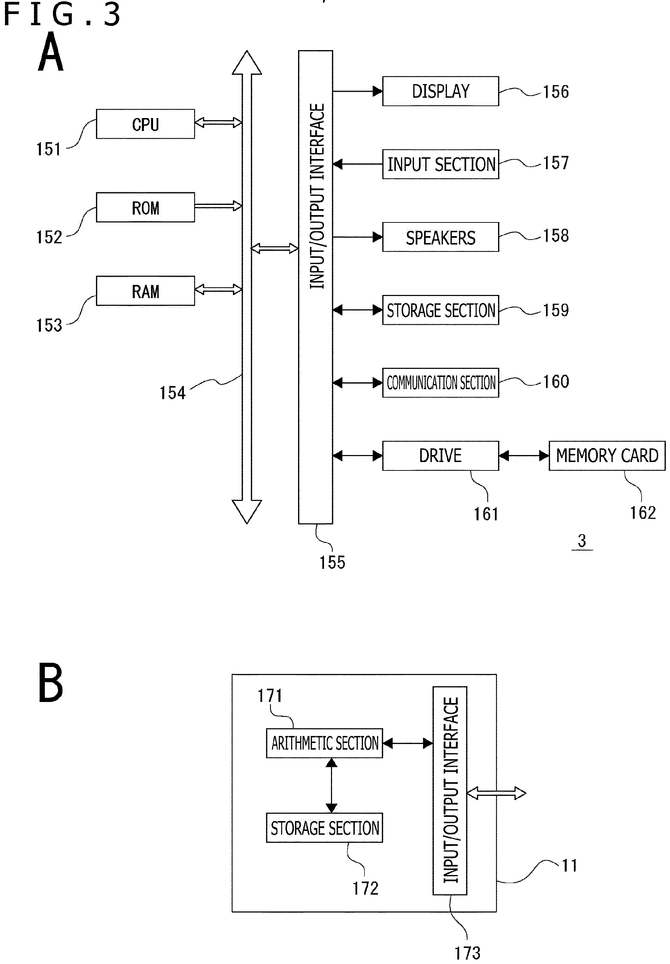

FIG. 3 illustrates block diagrams depicting hardware configurations of an information processing apparatus and a signal processing section in the embodiment.
[FIG. 4]

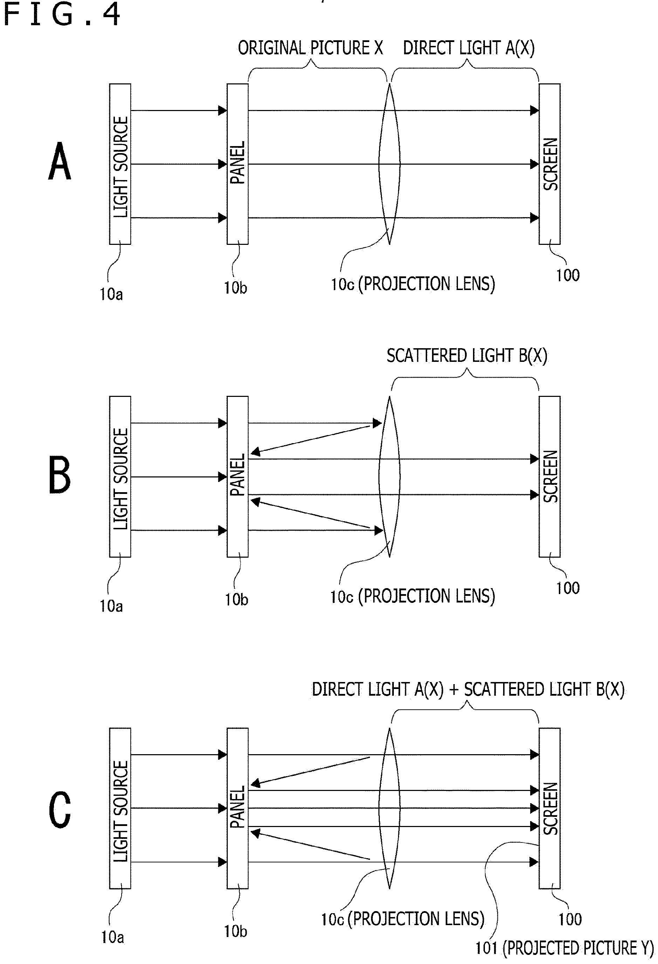

FIG. 4 illustrates explanatory diagrams explaining a light source, a panel, and a projection lens included in a projection optical system of the embodiment.
[FIG. 5]

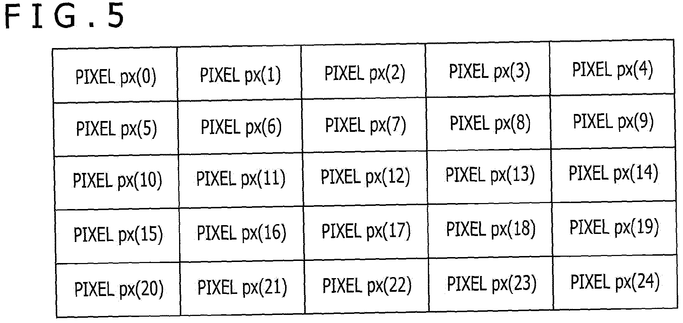

FIG. 5 is a schematic diagram explaining a picture projected by the embodiment.
[FIG. 6]

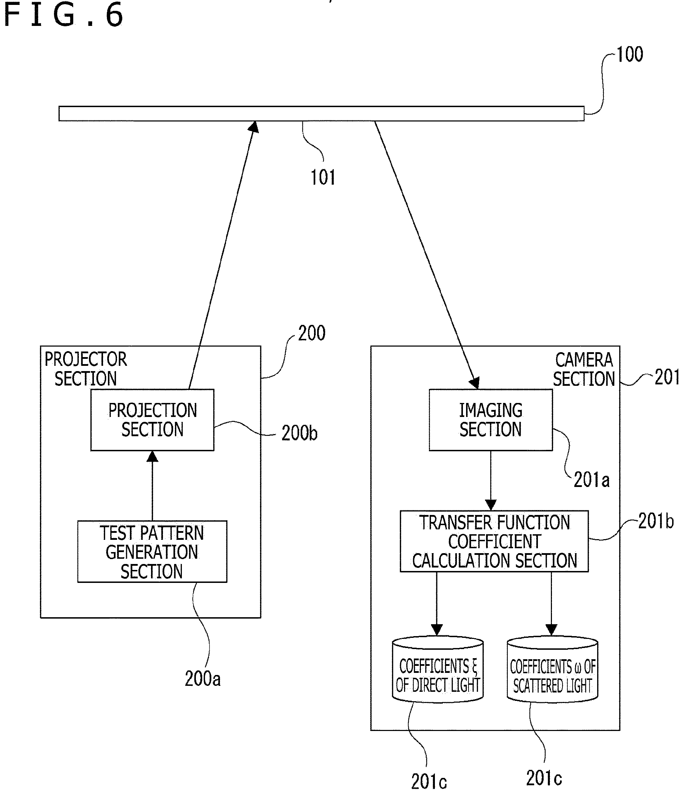

FIG. 6 is a block diagram of apparatuses for measuring the elements of a transfer function of the embodiment.
[FIG. 7]

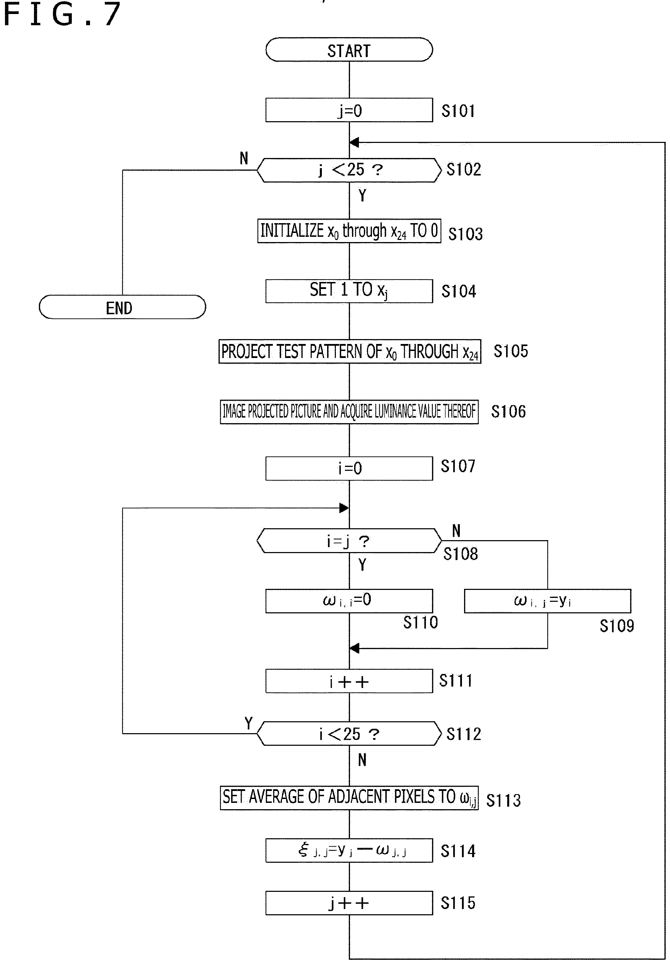

FIG. 7 is a flowchart for calculating the transfer function of the embodiment.
[FIG. 8]

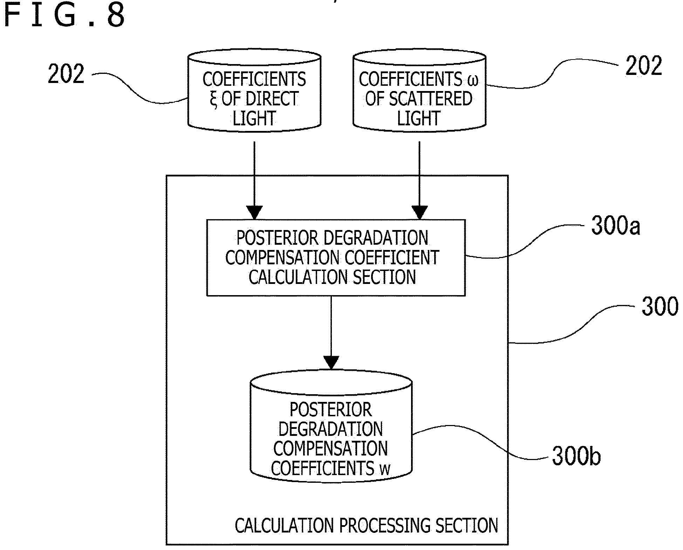

FIG. 8 is a block diagram of a calculation processing section in the embodiment.
[FIG. 9]

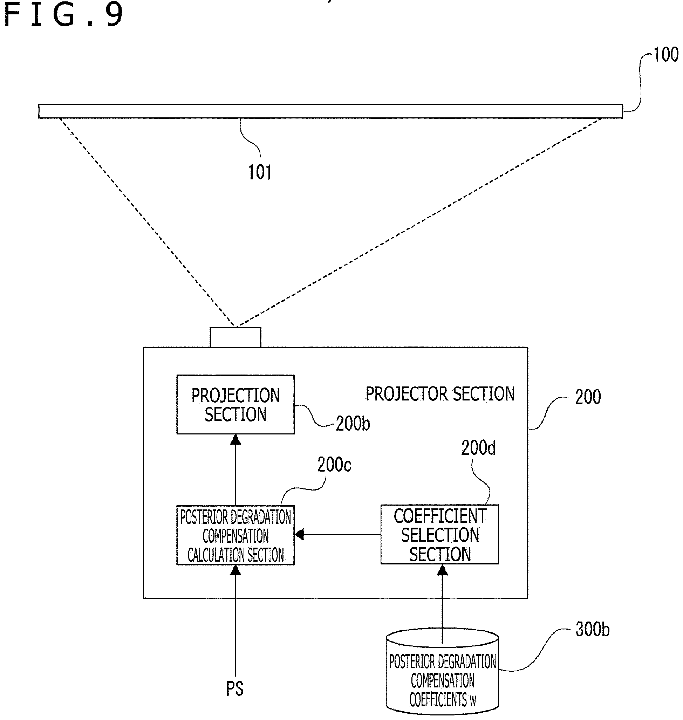

FIG. 9 is a block diagram of a projector section in the embodiment.
[FIG. 10]

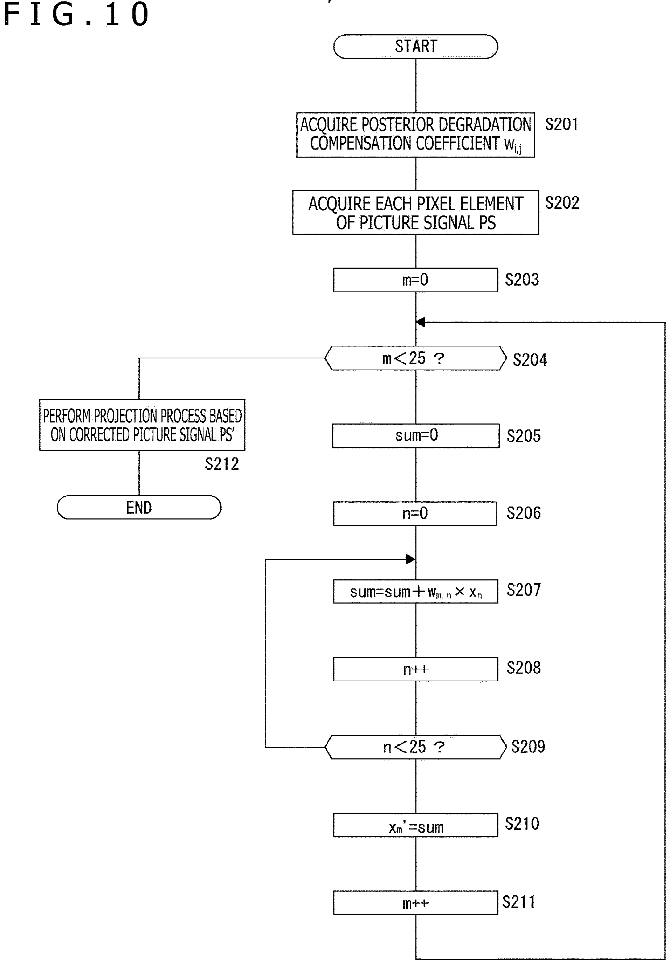

FIG. 10 is a flowchart for calculating a corrected picture signal with the embodiment.
[FIG. 11]

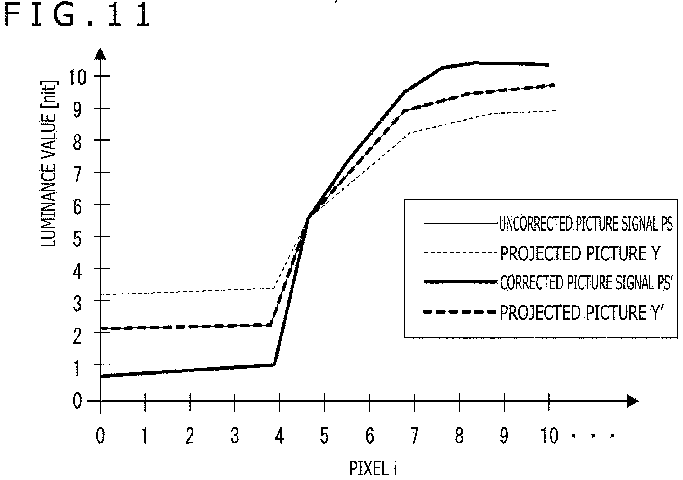

FIG. 11 is an explanatory diagram explaining relations between the luminance values of various picture signals of the embodiment on one hand and those of pictures projected thereby on the other hand.
[FIG. 12]

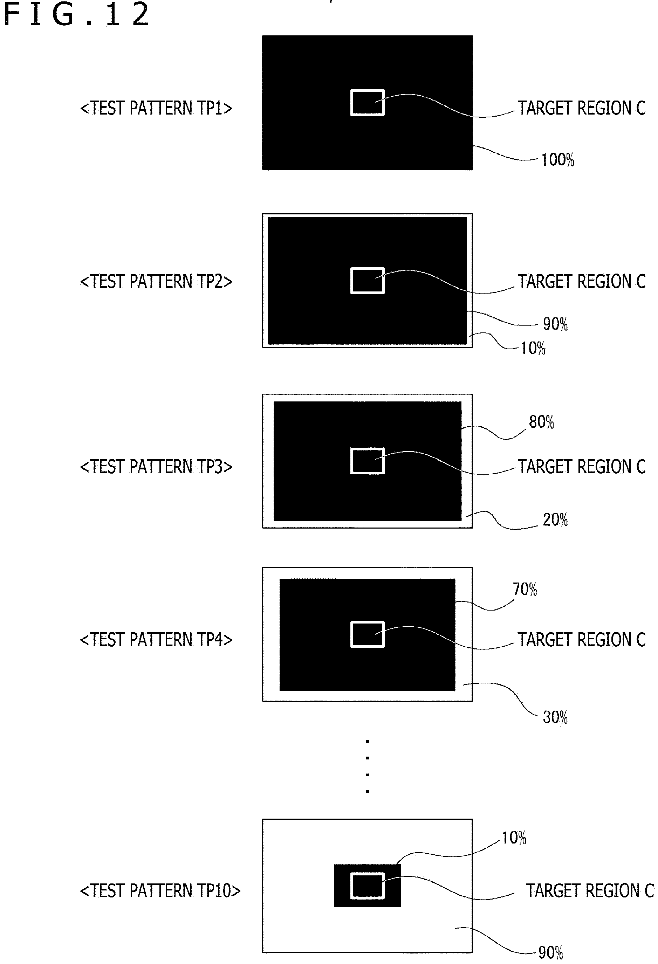

FIG. 12 illustrates explanatory diagrams explaining test patterns of the embodiment.
[FIG. 13]

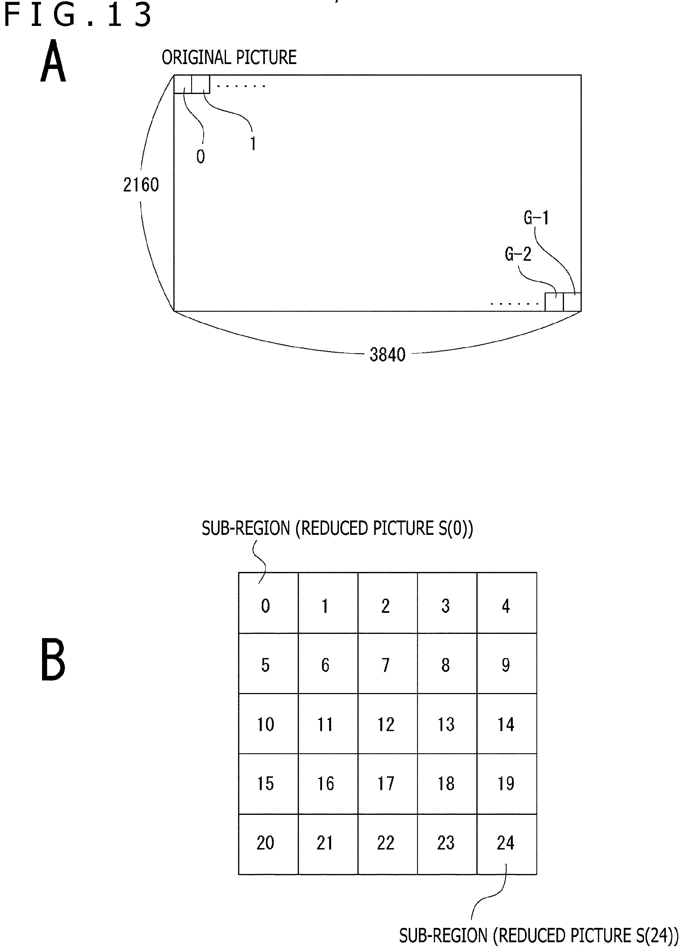

FIG. 13 is an explanatory diagram explaining the relations between an original picture on one hand and a picture reduced by the embodiment on the other hand.

[Description of Embodiments]

Some embodiments of the present disclosure are described below under the following headings:

<1. Configuration of the picture projection system>
<2. Hardware configuration>
<3. Overview of the theory of the reduction of contrast and the correction thereof>
<4. Correction processing procedure>
[4-1. Calculating the transfer function H(X)]
[4-2. Deriving the posterior degradation compensation function $H^{-1}(X)$]
[4-3. Applying the posterior degradation compensation function to the picture signal]
<5. Simplifying methods>
[5-1. Simplifying the calculation of the transfer function H(X)]
[5-2. Simplifying the application of the posterior degradation compensation function to the picture signal]
<6. Alternative examples>
<7. Conclusion>
<8. The present technology>

<1. Configuration of the picture projection system>

Explained below with reference to FIG. 1 is an example of picture projection display that uses a picture projection system embodying the present technology.
The picture projection system includes a projector 1, an imaging apparatus 2, and an information processing apparatus 3. FIG. 1 depicts a state in which a picture projected by the projector 1 is displayed as a projected picture 101 on a screen 100.
The projector 1 includes a projection optical system 10 and a signal processing section 11. A picture signal PS sent from an external apparatus acting as a picture source is input to the signal processing section 11 of the projector 1.
In the projector 1, the signal processing section 11 performs various processes such as diverse correction processing, gamma processing, color processing, luminance processing, contrast adjustment, sharpness adjustment, input picture clipping for display picture generation, and scaling. In so doing, the signal processing section 11 supplies R (red), G (green), and B (blue) picture signals to the projection optical system 10.

It is to be noted that the correction processing performed by the signal processing section 11 includes correction processes which, as will be discussed later, constitute part of the contrast adjustment.

The R signal, G signal, and B signal as picture signals having undergone diverse corrections are supplied to the projection optical system 10.

The projection optical system 10 includes a light source section, a light modulation section, and a projection lens system, for example. On the basis of the R, G, and B picture signals, the projection optical system 10 performs picture projection to display pictures on the screen 100.

Any one of diverse light sources such as an LED (Light Emitting Diode), a laser light source, a xenon lamp, and a mercury lamp can be adopted as the light source section in the projection optical system 10.

The light modulation section of the projection optical system 10 may utilize R, G, and B liquid crystal light valves, for example. That is, the projection optical system 10 receives R, G and B picture data from the signal processing section 11; generates an R picture signal, a G picture signal, and a B picture signal as liquid crystal drive signals based on the received picture data; and supplies the generated picture signals to the R, G, and B liquid crystal light valves to display red, green, and blue pictures.

In the projection optical system 10, the light from the light source section is divided into R light, G light, and B light that pass through the R, G, and B liquid crystal light values, respectively, to form projection light of red, green, and blue pictures. These pictures are combined and projected by the projection lens system to the screen 100 for display as a color picture thereon.

Besides performing the above-described projection, the projection lens system carries out focus adjustment, picture size adjustment, and projection accuracy adjustment on the projected picture. For such purposes, the projection lens system includes various lenses including a zoom lens and a focus lens, and drives these lenses to perform zoom operation, focus operation, or lens shift operation. The projection lens system further carries out picture size adjustment and projection angle adjustment.

It is to be noted that the above-described configuration is an example in which a transmissive liquid crystal projector is used as the projector 1 of the picture projection system. Alternatively, a reflective liquid crystal projector may be adopted as the projector 1.

The imaging apparatus 2 is positioned in such a manner as to image the picture 101 projected on the screen 100.

It is not necessary for the imaging apparatus 2 to be fixedly arranged. The imaging apparatus 2 is only required to be installed as needed when posterior degradation compensation coefficients, to be discussed later, are to be obtained.

The imaging apparatus 2 may be configured for an operator to manually operate to image the projected picture 101 on the screen 100. Alternatively, the information processing apparatus 3 or some other control apparatus may be configured to automatically control the angle of view, imaging direction, and release timing of the imaging apparatus 2 so as to image pictures needed to calculate the posterior degradation compensation coefficient, to be discussed later.

Using the pictures imaged by the imaging apparatus 2, the information processing apparatus 3 performs calculations necessary for suppressing the reduction of contrast in the projector 1. Specifically, the posterior degradation compensation coefficient (posterior degradation compensation function) is calculated.

The above-described information processing apparatus 3 may be either configured as a dedicated device in the picture projection system of this embodiment, or implemented using a general-purpose computer. As another alternative, the information processing apparatus 3 may be implemented using a mobile terminal apparatus such as a smartphone. In any case, an apparatus capable of arithmetic processing can be adopted as the information processing apparatus 3. In the information processing apparatus 3, an arithmetic processing unit such as a microcomputer performs processing based on predetermined software to obtain information necessary for executing correction operations on the projector 1 of the picture projection system.

It is to be noted that the information processing apparatus 3 may be either connected online continuously with the projector 1, or disconnected from networks and connected individually with only one of the components of the picture projection system. Alternatively, the information processing apparatus 3 may be temporarily connected with one of the components of the picture projection system. The information processing apparatus 3 may be further configured to exchange information with one of the components of the picture projection system via recording media.

The picture projection system as the embodiment depicted in FIG. 1 is only an example. As illustrated in FIG. 2, for example, the picture projection system may be an all-in-one projector 1A including the projection optical system 10, the signal processing section 11, an imaging apparatus 2A (another form of the imaging apparatus 2), and an information processing apparatus 3A (another form of the information processing apparatus 3). In this case, the information processing apparatus 3A is implemented using a microcomputer, a CPU (Central Processing Unit), or a DSP (Digital Signal Processor) incorporated in the projector 1A.

As another form of the embodiment in FIG. 1, a signal processing section that performs processes, to be discussed later, for contrast adjustment may be provided outside the projector 1. Such a signal processing section and the information processing apparatus 3 may be integrally configured.

<2. Hardware configuration>

A hardware configuration of the information processing apparatus 3 is explained below with reference to FIG. 3A.

The information processing apparatus 3 includes a CPU 151, a ROM (Rea Only Memory) 152, and a RAM (Random Access Memory) 153.

The CPU 151 performs various processes in accordance with programs stored in the ROM 152 or loaded into the RAM 153 from a storage section 159. The RAM 153 further stores, as needed, the data necessary for the CPU 151 to execute diverse processes.

The CPU 151, the ROM 152, and the RAM 153 are interconnected via a bus 154. The bus 154 is also connected with an input/output interface 155.

The input/output interface 155 can be connected with a display 156 configured with a liquid crystal panel or an organic EL (Electroluminescence) panel, an input section 157 configured with a keyboard and a mouse, speakers 158, a storage section 159 configured with an HDD (Hard Disk Drive), and a communication section 160.

The display 156 may be either integrated with the information processing apparatus 3 or formed as a separate device. For example, the display 156 displays imaged pictures, calculation results, and operation menus.

The input section 157 is meant as an input device for use by the user who operates the information processing apparatus 3 (e.g., an operator adjusting the picture projection system).

The communication section 160 performs wired or wireless communication with peripheral devices. The communication section 160 may be configured to download necessary software and to transmit diverse information by carrying out communication processing via networks including the Internet.

The input/output interface 155 is further connected with a drive 161 as needed. A memory card 162 can be attached to the drive 161.

Computer programs, for example, are read from the memory card 162 and installed into the storage section 159 as needed. The data processed by the CPU 151 may be stored into the memory card 162. The drive 161 may be a recording/reproduction drive that handles removable recording media such as magnetic disks, optical disks, and magneto-optical disks.

As described above, the information processing apparatus 3 has a hardware configuration of a computer apparatus.

It is to be noted that the information processing apparatus 3 of this embodiment is not limited to the hardware configuration with a single computer apparatus as depicted in FIG. 3A. Alternatively, a plurality of computer apparatuses may be formed into a system. The plurality of computer apparatuses may be configured into a system via a LAN (Local Area Network). Alternatively, the plurality of computer apparatuses may be remotely located when formed into a system via VPN (Virtual Private Network) using the Internet, for example.

In the case where the information processing apparatus 3A is provided instead of the information processing apparatus 3, the DSP may be utilized in place of the CPU 151. The display 156 may be provided as a simplified display attached to the projector 1A to display menu screens for selecting various functions of the projector 1A. As another alternative, the display 156 may be omitted altogether.

A hardware configuration of the signal processing section 11 is explained below with reference to FIG. 3B.

The signal processing section 11 includes an arithmetic section 171, a storage section 172, and an input/output interface 173, for example.

The arithmetic section 171 is connected with the input/output interface 173. The arithmetic section 171 receives data input from the outside via the input/output interface 173. Specifically, the arithmetic section 171 receives the R picture signal, G picture signal, and B picture signal.

After performing predetermined processes on the RGB picture signals, the arithmetic section 171 outputs the processed picture signals to the projection optical system 10 via the input/output interface 173.

The arithmetic section 171 uses the storage section 172 as an input buffer when receiving the RGB picture signals and as an output buffer when transmitting the processed signals.

The storage section 172 may store the posterior degradation compensation coefficients (or function), to be discussed later.

<3. Overview of the theory of the reduction of contrast and the correction thereof>

The cause of the reduction of contrast is explained below with reference to the accompanying drawings.

FIG. 4 with its subfigures depicts how the projection optical system 10 is configured with a light source 10a, a panel 10b acting as the light modulation section, and a projection lens 10c. The panel 10b as the light modulation section is implemented using LCoS (Liquid crystal on silicon: registered trademark), LCD (Liquid Crystal Display), or DLP (Digital Light Processing), for example.

The panel 10b is actually provided for each of the R, G, and B colors. In each subfigure of FIG. 4, one of the three panels 10b is depicted.

FIG. 4A depicts a route of light emitted from the light source 10a to pass through the panels 10b to generate R, G, and B pictures (red picture, green picture, and blue picture) that in turn transmit through the projection lens 10c to reach the screen 100.

As illustrated, the light past the panels 10b and before transmitting through the projection lens 10c is indicated as an original picture X (e.g., an original red picture). The light past the projection lens 10c is indicated as direct light A(X). In this manner, it is indicated that the original picture X differs from the direct light A(X) typically due to the scattering of light caused by the projection lens 10c.

As is understood from the indication of the direct light A(X), the direct light A(X) corresponds to the original picture X.

FIG. 4B depicts a route of light emitted from the light source 10a to pass through the panels 10b to generate R, G, and B pictures that are scattered by the projection lens 10c and return to the panel 10b, before transmitting again through the projection lens 10c to reach the screen 100. The light past the projection lens 10c is indicated as scattered light B(X).

As illustrated, the R light, G light, and B light can each generate scattered light.

As is understood from the indication of the scattered light B(X), the scattered light B(X) corresponds to the original picture X.

FIG. 4C depicts both the direct light A(X) and the scattered light B(X). As illustrated, the picture 101 projected on the screen 100 has the direct light A(X) and the scattered light B(X) added up altogether.

The projected picture is expressed by the following mathematical formula:

[Math. 1]

$$Y = A(X) + B(X)$$
$$= H(X)$$

The term H(X) above is a transfer function for deriving the picture 101 actually projected on the screen 100 (projected picture Y) when the picture that ought to be originally projected is the picture X.

Here, consider allowing a picture X' obtained by correcting the picture X to be output from the panel 10b so that the original picture may be projected as the projected picture Y.

At this time, a projected picture Y' in the case where the picture X' is output from the panel 10b is expressed by the following mathematical formula:

[Math. 2]

$$Y' = H(X')$$

Here, a correction formula to be added to the picture X is to be as follows:

[Math. 3]

$$X' = H^{-1}(X)$$

The projected picture Y' defined by the correction formula and by the transfer function H of the projector 1 is expressed with the following mathematical formula:

[Math. 4]

$$Y' = H(H^{-1}(X))$$
$$= X$$

That is, the projected picture Y' and the original picture X coincide with each other.

The correction formula $H^{-1}(X)$ is implemented when appropriately set as an inverse function of the transfer function H. The correction formula $H^{-1}(X)$ is referred to as the "posterior degradation compensation function."

<4. Correction processing procedure>

A processing procedure for performing the correction processing for suppressing the reduction of contrast (referred to as the contrast correction processing hereunder) is explained below with reference to the accompanying drawings.

It is to be noted that, for the purpose of simplified explanation, the original picture X and the projected picture Y are each assumed to be constituted with 25 pixels, i.e., with 5 pixels in the vertical direction and 5 pixels in the horizontal direction (see FIG. 5), for example.

For explanation purposes, each of the pixels is designated by a reference number as illustrated. Specifically, the pixel in the top leftmost position is indicated as "pixel px(0)," and the pixel immediately to the right thereof as "pixel px(1)."

[4-1. Calculating the transfer function H(X)]

A pixel acting as a source of scattered light is indicated as a "scatter source pixel" and a pixel affected by scattering as a "scatter destination pixel." For example, in the case where it is indicated that light is scattered from a scatter source pixel px(0) to a scatter destination pixel px(1), it means that the light to be projected to the pixel px(0) on the screen 100 is partially projected to the pixel px(1) on the screen 100 as a result of scattering.

The components of the scattered light are linearly approximated by the following mathematical formula using coefficients that are dependent on the coordinates of the scatter source pixel and the scatter destination pixel:

[Math. 5]

$$
\begin{pmatrix} y_0 \\ y_1 \\ \vdots \\ y_{23} \\ y_{24} \end{pmatrix} = \begin{pmatrix} \xi_{0,0} & 0 & \cdots & 0 & 0 \\ 0 & \xi_{1,1} & \cdots & 0 & 0 \\ \vdots & \vdots & \ddots & \vdots & \vdots \\ 0 & 0 & \cdots & \xi_{23,23} & 0 \\ 0 & 0 & \cdots & 0 & \xi_{24,24} \end{pmatrix} \begin{pmatrix} x_0 \\ x_1 \\ \vdots \\ x_{23} \\ x_{24} \end{pmatrix} + \begin{pmatrix} \omega_{0,0} & \omega_{0,1} & \cdots & \omega_{0,23} & \omega_{0,24} \\ \omega_{1,0} & \omega_{1,1} & \cdots & \omega_{1,23} & \omega_{1,24} \\ \vdots & \vdots & \ddots & \vdots & \vdots \\ \omega_{23,0} & \omega_{23,1} & \cdots & \omega_{23,23} & \omega_{23,24} \\ \omega_{24,0} & \omega_{24,1} & \cdots & \omega_{24,23} & \omega_{24,24} \end{pmatrix} \begin{pmatrix} x_0 \\ x_1 \\ \vdots \\ x_{23} \\ x_{24} \end{pmatrix}
$$

In the above formula, the term yo denotes the component of light (luminance value) projected ultimately to the pixel px(0) on the screen 100 as the direct light or scattered light.

The term $\xi_{0,0}$ is a coefficient representing the ratio of the light that ought to be projected to the pixel px(0) on the screen 100 but which is actually projected thereto without being scattered.

The term $\omega_{0,1}$ is a coefficient representing the ratio of the light that ought to be projected to the pixel px(1) on the screen 100 but which is instead scattered and projected to the pixel px(0) on the screen 100. Thus, appear the scatter source pixel px(1) and the scatter destination pixel px(0).

The term $x_0$ denotes the light emitted from the pixel px(0) of the panel 10b. That is, this light is the component which, of a picture signal input as the original picture X, corresponds to the pixel px(0).

The above-mentioned coefficients $\xi$ and $\omega$ can be calculated with a lens design simulator using the ray tracing method, for example.

It is also possible to measure the coefficients using actual apparatuses.

A block diagram of the apparatuses for measuring the elements of the transfer function H(X) is explained below with reference to FIG. 6.

A projector section 200 includes a test pattern generation section 200a and a projection section 200b. The projector section 200 is implemented with the projector 1 (see FIG. 1) or with the projector 1A (see FIG. 2), for example. The projection section 200b includes the projection optical system 10 and the signal processing section 11, for example.

The test pattern generation section 200a may be in the signal processing section 11, or may be installed outside the projector section 200.

A camera section 201 includes an imaging section 201a and a transfer function coefficient calculation section 201b. The camera section 201 further includes a storage section 201c that stores the coefficient $\xi$ of direct light and the coefficient $\omega$ of scattered light.

The imaging section 201a is implemented with the imaging apparatus 2 or with the imaging apparatus 2A, for example. The transfer function coefficient calculation section 201b is implemented with the information processing apparatus 3 or with the information processing apparatus 3A.

The picture 101 projected from the projection section 200b to the screen 100 is imaged by the imaging section 201a of the camera section 201. The projected picture 101 having been imaged is used to calculate the coefficients ($\xi$ and $\omega$) of the transfer function H(X).

Specific details of the processing performed by the projector section 200 and by the camera section 201 are explained below with reference to FIG. 7.

First, the projector section 200 performs processes to project a test pattern in which only one of the 25 pixels is lit. The pixel to be lit is assumed to be a pixel px(j).

In step S101, the projector section 200 assigns 0 to a variable j. In step S102, the projector section 200 performs a branching process reflecting whether or not the variable j is smaller than 25.

In the case where the variable j is smaller than 25, the projector section 200 goes to step S103 and initializes $x_0$ through $x_{24}$ to 0. In step S104, the projector section 200 performs a process of setting 1 to $X_j$.

Carrying out the processes of steps S103 and S104 establishes a test pattern in which only the pixel px(j) is lit (a test pattern in which only $X_j$ is 1).

In step S105, the projector section 200 projects the test pattern.

This causes the picture 101 to be projected to the screen 100 as the test pattern.

Next in step S106, the camera section 201 images the projected picture 101 and acquires the luminance value of each pixel therein. For example, the luminance value of the pixel px(0) is yo.

The camera section 201 performs processes to calculate the coefficients $\xi$ and $\omega$.

Specifically, the camera section 201 performs a process of setting 0 to a variable i in step S107. The variable i represents the pixel targeted (indicated as the target pixel px(i)) in a subsequent process. The subsequent process involves calculating the intensity of light (luminance) leaking into the target pixel px(i) (scatter destination pixel px(i)) as scattered light from the lit pixel px(j) (= scatter source pixel px(i)).

In step S108, the camera section 201 determines whether or not the variable i and the variable j have the same value.

In the case where the variable i and the variable j have different values, it means that the lit pixel (pixel px(j)) is different from the target pixel (pixel px(i)). That is, the luminance value acquired in step 106 belongs entirely to leak light stemming from scattered light.

Consequently, the camera section 201 goes to step S109 and sets the luminance value $y_i$ acquired in step S106 to a coefficient $\omega_{i,j}$.

On the other hand, in the case where the variable i and the variable j have the same value, it means that the lit pixel (pixel px(j)) is identical to the target pixel (pixel px(i)). That is, the luminance value acquired in step S106 includes not only the component of scattered light but also the component of direct light.

Thus, the camera section 201 goes to step S110 and assigns 0 as a tentative value to the coefficient $\omega_{i,j}$ (= $\omega_{i,i} = \omega_{i,j}$). The value of the coefficient $\omega_{i,j}$ is to be set appropriately in a subsequent process.

After setting the value to the coefficient $\omega_{i,j}$ in accordance with the variables i and j, the camera section 201 goes to step S111 and increments the variable i by 1. In step S112, the camera section 201 determines whether or not the variable i is smaller than 25.

In the case where the variable i is smaller than 25, the camera section 201 repeats the processes of steps S108 to S112. On the other hand, in the case where the variable i is 25 or larger, the camera section 201 goes to the process of step S113.

When the processes of steps S107 to S112 are repeated until the variable i reaches 25, the values of the coefficient $\omega_{i,j}$ of scattered light in the case where the variable j is fixed to a given value are appropriately set. It is to be noted that the values are not set in the case where the variable i and variable j have the same value, the coefficient $\omega_{i,j}$ (= $\omega_{i,i}$) being set with a tentative value (0).

In step S113, the camera section 201 performs a process of setting an appropriate value to $\omega_{i,j}$. Specifically, the camera section 201 calculates, from the coefficient $\omega$ of surrounding pixels, the component of leak light with respect to the pixel px(j).

Thus, in the case where the variable j is 0, for example, i.e., where the lit pixel is the pixel px(0), with the component of leak light to the pixel px(0) taken into consideration, the camera section 201 calculates an average of coefficients $\omega_{1,0}$ and $\omega_{5,0}$ of scattered light set for the surrounding pixels px(1) and px(5) (see FIG. 5), and sets the average as a leak light component $\omega_{0,0}$ for the pixel px(0).

In the case where the variable j is 2, for example, i.e., where the lit pixel is the pixel px(2), with the component of leak light to the pixel px(2) taken into consideration, the camera section 201 calculates an average of coefficients $\omega_{1,2}$, $\omega_{4,2}$ and $\omega_{7,2}$ of scattered light set for the surrounding pixels px(1), px(4) and px(7) (see FIG. 5), and sets the average as the leak light component for the pixel px(2).

Furthermore, in the case where the variable j is 6, for example, i.e., where the lit pixel is the pixel px(6), with the component of leak light to the pixel px(6) taken into consideration, the camera section 201 calculates an average of coefficients $\omega_{,6}$, $\omega_{5,6}$, $\omega_{7,6}$ and $\omega_{11,6}$ of scattered light set for the surrounding pixels px(1), px(5), px(7) and pixel px(11) (see FIG. 5), and sets the average as the leak light component for the pixel px(6).

Then, in step S114, the camera section 201 performs a process of setting a coefficient $\xi_{j,j}$ of direct light for the pixel px(j).

Specifically, the camera section 201 subtracts the component of scattered light (i.e., coefficient $\omega_{j,j}$) set in step S113 above from the luminance value acquired in step S106 with respect to the pixel px(j). What is left from the subtraction is set as the component of direct light (i.e., coefficient $\xi_{j,j}$).

Every time the series of the processes from step S102 to step S114 is carried out, the coefficients $\omega_{0,j}$ to $\omega_{24,j}$ of scattered light and the coefficient $\xi_{j,j}$ of direct light for a given variable j are set. Thus, the processes of steps S102 to S114 are repeated as many times as the number that can be taken by the variable j so as to set a series of coefficients $\omega_{0,0}$ to $\omega_{24,24}$ of scattered light and a series of coefficients $\xi_{0,0}$ to $\xi_{24,24}$ of direct light.

For that purpose, the camera section 201 increments the variable j by 1 in step S115 and determines whether or not the variable j is smaller than 25 in step S102.

In the case where the variable j is smaller than 25, the camera section 201 repeats the processes of steps S103 to S115. In the case where the variable j has reached 25, the camera section 201 terminates the series of the processes depicted in FIG. 7.

The coefficients of the transfer function H(X) indicated in Math. 5 above are calculated by executing once the series of the processes in FIG. 7.

It is to be noted that the transfer function H(X) varies with the positions of each lens in the projector 1, the lens positions determining a zoom mode, a shift mode, and a focus mode with respect to the picture projected by the projector 1.

Thus, the processes in FIG. 7 are performed for each of the lens positions, thereby calculating the transfer function H(X) for each lens position.

[4-2. Deriving the posterior degradation compensation function $H^{-1}(X)$

Explained below is how to derive the posterior degradation compensation function $H^{-1}(X)$ with respect to the transfer function H(X) calculated for each of the lens positions.

If each element of the posterior degradation compensation function $H^{-1}(X)$ is set for w, the posterior degradation compensation function $H^{-1}(X)$ is expressed by the following mathematical formula:

[Math. 6]

$$
\begin{pmatrix}
w_{0,0} & w_{0,1} & \cdots & w_{0,23} & w_{0,24} \\
w_{1,0} & w_{1,1} & \cdots & w_{1,23} & w_{1,24} \\
\vdots & \vdots & \ddots & \vdots & \vdots \\
w_{23,0} & w_{23,1} & \cdots & w_{23,23} & w_{23,24} \\
w_{24,0} & w_{24,1} & \cdots & w_{24,23} & w_{24,24}
\end{pmatrix}
=
\begin{pmatrix}
\xi_{0,0}+\omega_{0,0} & \omega_{0,1} & \cdots & \omega_{0,23} & \omega_{0,24} \\
\omega_{1,0} & \xi_{1,1}+\omega_{1,1} & \cdots & \omega_{1,23} & \omega_{1,24} \\
\vdots & \vdots & \ddots & \vdots & \vdots \\
\omega_{23,0} & \omega_{23,1} & \cdots & \xi_{23,23}+\omega_{23,23} & \omega_{23,24} \\
\omega_{24,0} & \omega_{24,1} & \cdots & \omega_{24,23} & \xi_{24,24}+\omega_{24,24}
\end{pmatrix}^{-1}
$$

Here, each element w of the posterior degradation compensation function $H^{-1}(X)$ is referred to as the posterior degradation compensation coefficient.

As indicated by Math. 6 above, the posterior degradation compensation coefficients w are obtained by calculating an inverse matrix of the matrix that includes the coefficients $\xi$ and $\omega$ acquired in the series of the processes in FIG. 7.

FIG. 8 is a block diagram of a calculation processing section 300 for calculating the posterior degradation compensation coefficients w.

The calculation processing section 300 includes a posterior degradation compensation coefficient calculation section 300a that calculates the posterior degradation compensation coefficients by acquiring relevant coefficients from the storage section 201c storing the coefficients $\xi$ of direct light and the coefficients $\omega$ of scattered light calculated by the camera section 201, and a storage section 300b that stores the calculated posterior degradation compensation coefficients.

The calculation processing section 300 may be the information processing apparatus 3 depicted in FIG. 1 or the information processing apparatus 3A in FIG. 2.

Alternatively, the calculation processing section 300 may be provided as part of the camera section 201 depicted in FIG. 6 or as part of the projector section 200.

[4-3. Applying the posterior degradation compensation function to the picture signal]

Explained below is how to apply the posterior degradation compensation function $H^{-1}(X)$ to the picture signal PS sent from an external apparatus.

With respect to the elements of the pixels ($x_0$ to $X_{24}$) in the picture signal PS input as the original picture X, the following mathematical formula expresses the elements of the pixels ($X_0'$ to $X_{24}'$) in a corrected picture signal PS' to which the posterior degradation compensation function $H^{-1}(X)$ is applied:

[Math. 7]

$$\begin{pmatrix} x_0' \\ x_1' \\ \vdots \\ x_{23}' \\ x_{24}' \end{pmatrix} = \begin{pmatrix} w_{0,0} & w_{0,1} & \cdots & w_{0,23} & w_{0,24} \\ w_{1,0} & w_{1,1} & \cdots & w_{1,23} & w_{1,24} \\ \vdots & \vdots & \ddots & \vdots & \vdots \\ w_{23,0} & w_{23,1} & \cdots & w_{23,23} & w_{23,24} \\ w_{24,0} & w_{24,1} & \cdots & w_{24,23} & w_{24,24} \end{pmatrix} \cdot \begin{pmatrix} x_0 \\ x_1 \\ \vdots \\ x_{23} \\ x_{24} \end{pmatrix}$$

In the case where the above-described corrected picture signal PS' is input, the following mathematical formula expresses the elements $y_0'$ to $Y_{24}'$ of the projected picture Y':

[Math. 8]

$$\begin{pmatrix} y_0' \\ y_1' \\ \vdots \\ y_{23}' \\ y_{24}' \end{pmatrix} = \begin{pmatrix} \xi_{0,0}+\omega_{0,0} & \omega_{0,1} & \cdots & \omega_{0,23} & \omega_{0,24} \\ \omega_{1,0} & \xi_{1,1}+\omega_{1,1} & \cdots & \omega_{1,23} & \omega_{1,24} \\ \vdots & \vdots & \ddots & \vdots & \vdots \\ \omega_{23,0} & \omega_{23,1} & \cdots & \xi_{23,23}+\omega_{23,23} & \omega_{23,24} \\ \omega_{24,0} & \omega_{24,1} & \cdots & \omega_{24,23} & \xi_{24,24}+\omega_{24,24} \end{pmatrix} \cdot \begin{pmatrix} \xi_{0,0}+\omega_{0,0} & \omega_{0,1} & \cdots & \omega_{0,23} & \omega_{0,24} \\ \omega_{1,0} & \xi_{1,1}+\omega_{1,1} & \cdots & \omega_{1,23} & \omega_{1,24} \\ \vdots & \vdots & \ddots & \vdots & \vdots \\ \omega_{23,0} & \omega_{23,1} & \cdots & \xi_{23,23}+\omega_{23,23} & \omega_{23,24} \\ \omega_{24,0} & \omega_{24,1} & \cdots & \omega_{24,23} & \xi_{24,24}+\omega_{24,24} \end{pmatrix}^{-1} \cdot \begin{pmatrix} x_0 \\ x_1 \\ \vdots \\ x_{23} \\ x_{24} \end{pmatrix}$$

$$= \begin{pmatrix} 1 & 0 & \cdots & 0 & 0 \\ 0 & 1 & \cdots & 0 & 0 \\ \vdots & \vdots & \ddots & \vdots & \vdots \\ 0 & 0 & \cdots & 1 & 0 \\ 0 & 0 & \cdots & 0 & 1 \end{pmatrix} \cdot \begin{pmatrix} x_0 \\ x_1 \\ \vdots \\ x_{23} \\ x_{24} \end{pmatrix}$$

As is understood from Math. 8 above, the projected picture Y' coincides with the original picture X input as the uncorrected picture signal PS.

FIG. 9 is a block diagram of the projector section 200 that applies the posterior degradation compensation function.

As depicted in FIG. 9, the projector section 200 includes the projection section 200b, a posterior degradation compensation calculation section 200c, and a coefficient selection section 200d.

The coefficient selection section 200d acquires the lens position of each of the lenses furnished in the projector 1, and obtains the appropriate posterior degradation compensation coefficient w corresponding to each lens position from the storage section 300b that stores the posterior degradation compensation coefficients w. Instead of acquiring the lens positions, the coefficient selection section 200d may receive a control signal from a control section such as the CPU of the projector 1 that keeps tabs on the lens positions, the coefficient selection section 200d acquiring the posterior degradation compensation coefficients w in accordance with the control signal.

The posterior degradation compensation calculation section 200c calculates the corrected picture signal PS' from the picture signal PS and from the posterior degradation compensation coefficients w.

As described above, the projector section 200 is implemented with the projector 1 (see FIG. 1) or with the projector 1A (see FIG. 2). The posterior degradation compensation calculation section 200c and the coefficient selection section 200d may be provided outside the projector section 200. Also, the projector 1 or 1A may be configured with the projector section 200 that includes the posterior degradation compensation calculation section 200c and the coefficient selection section 200d, as well as with the storage section 300b that stores the posterior degradation compensation coefficients w. In this case, the projector 1 or 1A may include the calculation processing section 300 depicted in FIG. 8.

Explained below with reference to FIG. 10 are the processes performed by the coefficient selection section 200d and the posterior degradation compensation calculation section 200c in the projector section 200 for calculating the corrected picture signal PS' from the picture signal PS and from the posterior degradation compensation coefficients w.

It is to be noted that these are the processes that calculate successively the elements ($X_0$' to $X_{24}$') of the corrected picture signal PS'. The pixel targeted for calculation is referred to as the "calculation target pixel" and indicated as a pixel px(m). When one calculation target pixel is to be calculated, it is necessary to perform a process of adding up the scattered light from different pixels. A pixel acting as a source of scattered light is referred to as the "scatter source pixel" as discussed above and indicated as a pixel px(n).

The processes depicted in FIG. 10 are performed for each frame picture. Thus, in the case where the frame of the projected picture is updated 30 times per second, for example, the processes in FIG. 10 are carried out 30 times per second.

In step S201, the projector section 200 performs a process of acquiring a posterior degradation compensation coefficient $w_{i,j}$. As mentioned above, this process involves acquiring the appropriate coefficient corresponding to the lens position in the projector 1. However, in the case where the posterior degradation compensation coefficients are stored not entirely but intermittently with respect to all lens positions, the projector section 200 may acquire an appropriate posterior degradation compensation coefficient w by selecting, from among the lens positions stored in the storage section 300b, the lens position closest to the current lens position in the projector 1. Alternatively, it is possible to acquire the most appropriate posterior degradation compensation coefficient w by selecting a plurality of lens positions close to the current lens position in the projector 1 and by performing a linear interpolation on the selected lens positions.

Then, in step S202, the projector section 200 acquires the pixel elements ($X_0$' to $X_{24}$') of the uncorrected picture signal PS.

The projector section 200 proceeds to initialize a variable m to 0 (step S203), before performing a process of determining whether or not the variable m is smaller than 25. The variable m is used to identify the pixel to be targeted for the upcoming correction process.

In the case where the variable m is smaller than 25, the projector section 200 performs processes of calculating an element $X_m$' of the corrected picture signal PS' corresponding to the calculation target pixel px(m), in step S205 and the subsequent steps.

First, the projector section 200 initializes a variable sum to 0 in step S205. The variable sum is used when the scattered light components from different pixels are added up. The variable sum to which the scattered light components are added is used in ultimately calculating the element $X_m$'.

Then, in step S206, the projector section 200 initializes a variable n to 0. The variable n is used to identify the scatter source pixel.

Next, the projector section 200 performs a process of adding up the scattered light components. Specifically, the projector section 200 in step S207 multiplies a posterior degradation compensation coefficient $W_{m,n}$ by an element $X_n$ of the uncorrected picture signal PS, and updates the variable sum by adding the product of the multiplication thereto.

In step S208, the projector section 200 increments the variable n by 1. In step S209, the projector section 200 determines whether or not the variable n is smaller than 25. In the case where the variable n is smaller than 25, the projector section 200 repeats the processes of steps S207 to S209.

That is, with the variable n successively incremented by 1, the scattered light component of each pixel is added up to 25 or more. It is to be noted that, in the case where the variable n and the variable m have the same value, it means that the posterior degradation compensation coefficient w includes the component of direct light. Thus, the direct light component is also added up (see Math. 6).

After completing the process of adding up the direct light and the scattered light components, the projector section 200 goes to step S210 and assigns the variable sum to the element $X_m$' of the corrected picture signal PS'. In this manner, one element of the corrected picture signal PS' is calculated.

In step S211, the projector section 200 increments the variable m by 1, before going to step S204 to repeat the process thereof. That is, as the variable m is incremented by 1 starting from 0 up to 24, the processes of steps S204 to S211 are carried out 25 times. In this manner, the elements of the corrected picture signal PS' ($X_0$' to $X_{24}$') are calculated.

Finally, following the determination in step S204 that the variable m is 25 or larger, the projector section 200 goes to step S212 and performs a projection process based on the corrected image signal PS'. In this manner, the corrected picture Y' (= original picture X) is projected to the screen 100.

FIG. 11 is a diagram plotting the luminance values [nit] of an uncorrected picture signal PS (original picture X), a corrected picture signal PS' (corrected picture X'), a projected picture Y, and a projected picture Y'.

As illustrated, the difference in magnitude between the plotted values of the projected picture Y (thin dotted line in the drawing) is smaller than that of the uncorrected picture signal PS (thin solid line). This means that in the case where the original picture X is input as the picture signal PS and projected without undergoing the above-described correction, the projected picture Y has a lower contrast than the original picture X.

On the other hand, when the uncorrected picture signal PS is corrected to become the corrected picture signal PS' (thick solid line) of which the difference in magnitude between the plotted values is made larger than that of the uncorrected picture signal PS (thin solid line), the difference in magnitude between the plotted values of the corrected projected picture Y' (thick dotted line) is made approximately the same as that of the original picture X (thin solid line). This means that the original picture X and the corrected projected picture Y' have approximately the same contrast. That is, the reduction of contrast is compensated.

<5. Simplifying methods>

Some methods of simplifying the correction process discussed above are described below.

[5-1. Simplifying the calculation of the transfer function H(X)]

The above-described method of calculating the transfer function H(X) involves, for example, executing the test pattern with only one pixel lit therein as many times as the number of pixels in the picture. Specifically discussed above is the example of 25 pixels constituted with 5 pixels in the vertical direction and 5 pixels in the horizontal direction. Thus, the example involves having 25 test patterns generated and projected to the screen 100 and getting the projected test patterns imaged.

However, in the case where this method is applied to a 4K picture constituted with 2,160 pixels in the vertical direction and 3,840 pixels in the horizontal direction, it would become necessary to generate, project, and image approximately 8 million test patterns. This is enormously time-consuming and not very practical.

What follows is an example of simplifying the calculation of the transfer function H(X). The mathematical formula below is an extraction from Math. 5 above of the terms regarding the luminance value $Y_c$ of a given pixel.

Whereas Math. 5 is used in connection with the example of 25 pixels constituted with 5 pixels in the vertical direction and 5 pixels in the horizontal direction, the above formula is transformed into a formula targeted for the pixels px(0) through px(max) as follows:

[Math. 9]

$$y_c = \xi_{c,c} \cdot x_c + \begin{pmatrix} \omega_{c,0} & \omega_{c,1} & \cdots & \omega_{c,c} & \cdots & \omega_{c,\max-1} & \omega_{c,\max} \end{pmatrix} \cdot \begin{pmatrix} x_0 & x_1 & \cdots & x_c & \cdots & x_{\max-1} & x_{\max} \end{pmatrix}^T$$

If it is assumed here that scattered light smoothly spreads in the space, the coefficient $\omega_{i,j}$ is expressed by a linear first approximation using the distance $d_{i,j}$ between the scatter destination pixel px(j) and the scatter destination pixel px(i) as follows:

[Math. 10]

$$\omega_{i,j} = a_i \cdot d_{i,j} + b_i$$

The following mathematical formula is obtained by rewriting Math. 9 using the above Math. 10:

[Math. 11]

$$y_c = \xi_{c,c} \cdot x_c + \begin{pmatrix} \omega_{c,0} & \omega_{c,1} & \cdots & \omega_{c,c} & \cdots & \omega_{c,max-1} & \omega_{c,max} \end{pmatrix} \cdot \begin{pmatrix} x_0 & x_1 & \cdots & x_c & \cdots & x_{max-1} & x_{max} \end{pmatrix}^T$$

$$= \xi_{c,c} \cdot x_c + \sum_{j=0}^{max} \left( a_c \cdot d_{c,j} \cdot x_j + b_c \cdot x_j \right)$$

$$= \xi_{c,c} \cdot x_c + a_c \cdot \sum_{j=0}^{max} \left( d_{c,j} \cdot x_j \right) + b_c \cdot \sum_{j=0}^{max} \left( x_j \right)$$

Here, the values of $u_c$ and $v_c$ are set as follows:

[Math. 12]

$$u_c = \sum_{j=0}^{max} \left( d_{c,j} \cdot x_j \right), v_c = \sum_{j=0}^{max} \left( x_j \right)$$

Then, Math. 11 above can be transformed into the following formula:

[Math. 13]

$$y_c = \xi_{c,c} \cdot x_c + a_c \cdot u_c + b_c \cdot v_c$$

In the above formula, the values $u_c$ and $v_c$ are calculated for each test pattern and can be uniquely determined by the test pattern. That is, these values may be calculated without actually projecting the test patterns.

Consequently, there are three unknown numbers $\xi_{c,c}$, $a_c$, and $b_c$ that cannot be calculated without projecting the test patterns. That is, the unknowns are calculated by solving three simultaneous equations that include the numbers $\xi_{c,c}$, $a_c$, and $b_c$.

Explained below is an example of calculating the unknowns $\xi_{c,c}$, $a_c$, and $b_c$ using 10 test patterns.

The 10 test patterns are explained below with reference to FIG. 12.

A test pattern TP1 is a pattern such that the ratio of white-lit pixels to unlit black pixels is 0:10. That is, all pixels are unlit.

A test pattern TP2 is a pattern with its outer circumference lit in such a manner that the ratio of white-lit pixels to unlit black pixels is 1:9.

A test pattern TP3 is a pattern with its outer circumference lit in such a manner that the ratio of white-lit pixels to unlit black pixels is 2:8.

Likewise, there are provided a test pattern TP4 (lit/unlit ratio is 3:7), a test pattern TP5 (lit/unlit ratio is 4:6), a test pattern TP6 (lit/unlit ratio is 5:5), a test pattern TP7 (lit/unlit ratio is 6:4), a test pattern TP8 (lit/unlit ratio is 7:3), a test pattern TP9 (lit/unlit ratio is 8:2), and a test pattern TP10 (lit/unlit ratio is 9:1).

These 10 test patterns are projected to the screen 100. That is, the test pattern for use in step S105 in FIG. 7 is selected from the above-described 10 test patterns. The processes of steps S106 to S114 are then performed on the selected test pattern.

In other words, on the 10 test patterns, the processes of steps S106 to S114 are performed 10 times in a loop. This provides 10 formulas, which are used to calculate the unknown numbers $\xi_{c,c}$, $a_c$, and $b_c$.

A method of further reducing the burden of processing is explained here. The processes of steps S107 to S112 are carried out in a loop as many times as the number of pixels in the picture, with the variable i incremented successively. However, in the case of the above-mentioned 4K picture, the processes need to be performed approximately 8 million times in a loop.

Thus, the target pixel px(i) in the preceding example is replaced, in this example of simplification, with a sub-region as a target region I including a plurality of pixels including the pixel px(i). An average of the luminance values of the target region I (average luminance value $Y_I$) is then calculated. In this case, a given pixel px(c) is regarded as the target pixel, so that the target sub-region is a target region C as a sub-region including the given pixel px(c). Because the average luminance value yc calculated from the target region C is also the representative value of the target region C, this value can be regarded as the luminance value $Y_c$ with respect to the pixel px(c). That is, the relation $Y_c = yc$ holds.

Then, the following formula is derived:

[Math. 14]

$$y_{c,0\%} = \xi_{c,c} \cdot x_c + a_c \cdot u_{c,0\%} + b_c \cdot v_{c,0\%} + e_{0\%}$$

$$y_{c,10\%} = \xi_{c,c} \cdot x_c + a_c \cdot u_{c,10\%} + b_c \cdot v_{c,10\%} + e_{10\%}$$

$$\vdots$$

$$y_{c,80\%} = \xi_{c,c} \cdot x_c + a_c \cdot u_{c,80\%} + b_c \cdot v_{c,80\%} + e_{80\%}$$

$$y_{c,90\%} = \xi_{c,c} \cdot x_c + a_c \cdot u_{c,90\%} + b_c \cdot v_{c,90\%} + e_{90\%}$$

The value $Y_{c, 10\%}$ is a luminance value measured by use of the test pattern TP2 in which the lit pixels constitute a 10% region. The values $u_{c, 10\%}$ and $v_{c, 10\%}$ are values that can be calculated beforehand for the test pattern TP2. It is to be noted that the term $e_{10\%}$ represents an error term.

The three unknown numbers ($\xi_{c,c}$, $a_c$, $b_c$) are calculated by solving 10 simultaneous equations indicated as Math. 10 above.

It is to be noted that the three unknowns may be calculated more accurately by use of the least-square method.

[5-2. Simplifying the application of the posterior degradation compensation function to the picture signal]

The elements w of the posterior degradation compensation function $H^{-1}(X)$ explained in reference to Math. 6 are nearer one another the closer the positions of the corresponding pixels are to one another.

Here, the picture based on the uncorrected picture signal PS (original picture) is divided into a plurality of sub-regions. The picture derived from each sub-region is indicated as a reduced picture.

FIG. 13A depicts an original picture constituted with 2,160 pixels in the vertical direction and 3,840 pixels in the horizontal direction amounting to approximately 8 million pixels. The pixels range from a pixel px(0) to a pixel px(G-1), where G = 2,160 × 3,840.

FIG. 13B divides the original picture into as many as g sub-regions. Each sub-region is a reduced picture. The reduced pictures range from a reduced picture S(0) to a reduced picture S(g-1). FIG. 13B depicts an example in which g = 25.

The posterior degradation compensation coefficient w of the pixel px(n) as one of the pixels in a reduced picture S(k) (i.e., n∈k) is approximated using the following mathematical formula:

[Math. 15]

$$w_{c,n}\Big|_{n\in k} \approx W_{c,k}$$

Here, the term $W_{c,k}$ is regarded as the posterior degradation compensation coefficient corresponding to the reduced picture. Also, the terms $W_{c,k}$, $X_k$, and p are defined by the mathematical formula as follows:

[Math. 16]

$$W_{c,k} = \frac{1}{p}\sum_{n\in k} w_{c,n} \,,\, X_k = \frac{1}{p}\sum_{n\in k} x_n \,,\, p = \frac{G}{g}$$

The following mathematical formula is obtained by transforming Math. 6 using Math. 16 above:

[Math. 17]

$$x_c{}' = \sum_{n=0}^{G-1} W_{c,n} \cdot x_n$$

$$\approx \left(1 - p\sum_{k=0}^{g-1} W_{c,k}\right) \cdot x_c + \sum_{k=0}^{g-1} W_{c,k} \cdot X_k$$

$$= \psi_c \cdot x_c + \sum_{k=0}^{g-1} W_{c,k} \cdot X_k$$

A picture $X_i$ based on the reduced picture is known to be obtained quickly using the Integral Image technique, for example. Thus, the terms $\Psi_c$ and $W_{c,k}$ obtained here are used in conjunction with 1+g coefficients and Math. 17 above to rapidly calculate the element $x_i{}'$ of each pixel in the corrected picture signal PS'.

Specifically, whereas a product-sum operation is required to be performed as many as G (= 8 million) times on each of the pixels in a 4K picture, the above-described simplifying method involves carrying out the product-sum operation only g+1 (= 25) times on each pixel.

<6. Alternative examples>

The present technology permits suppression of the reduction of contrast due to the scattered light stemming from signal processing. Besides that, the technology improves the picture quality by suppressing ghost components. Further, the technology suppresses the mixing of colors (so as to improve color reproducibility).

Apart from the above uses, the present technology can be used for preventing diverse kinds of degradation in the case where pictures are projected to a curved surface such as a dome-shaped surface.

Furthermore, the present technology can be applied to cases in which the components of light to be projected to other pixels affect these pixels due to light reflection in the room.

Also, the present technology can be applied to all kinds of displays where scattered light can occur, as in the case of LCDs with their backlight reflection.

<7. Conclusion>

The above-described embodiment of the technology provides the following advantages:
A signal processing apparatus of the embodiment (e.g., an apparatus equipped with the signal processing section 11 depicted in FIG. 1 or 2, such as the projector 1 or 1A) includes a compensation coefficient application section (posterior degradation compensation calculation section 200c) that applies a posterior degradation compensation coefficient to a picture input signal (picture signal PS) input to a picture projection section (projection section 200b), the posterior degradation compensation coefficient being based on scattered light caused by the picture projection section in a picture 101 projected by the picture projection section.

More specifically, the signal processing apparatus includes a coefficient acquisition section (coefficient selection section 200d) that acquires a posterior degradation compensation coefficient for compensating the degradation due to scattered light in the picture 101 projected by the picture projection section (projection section 200b), the scattered light being caused by the picture projection section; and a compensation coefficient application section (posterior degradation compensation calculation section 200c) that applies the posterior degradation compensation coefficient to the picture input signal (picture signal PS) input to the picture projection section that in turn outputs projection light.

That is, the coefficient acquisition section acquires a posterior degradation compensation coefficient such as to compensate the reduction of contrast due to the occurrence of scattered light, for example, and the compensation coefficient application section applies the posterior degradation compensation coefficient to the picture signal PS.

In this manner, the compensated projected picture is given an appropriate contrast and thereby made equivalent to the picture to be originally projected (original picture X).

It is stated as an example that the signal processing apparatus of the embodiment includes the compensation coefficient selection section (coefficient selection section 200d) that selects the posterior degradation compensation coefficient applied by the compensation coefficient application section (posterior degradation compensation calculation section 200c) in accordance with the positions of lenses in the picture projection section (projection section 200b), the lens positions determining zoom mode, shift mode, and focus mode with respect to the projected picture 101.

In some cases, the model of scattered light attributable to the lens may become a different scattered light model due to a different lens position. When the signal processing apparatus acquires and applies the posterior degradation compensation coefficient corresponding to the lens position, it is possible to perform an optimum compensation process on the picture signal PS and thereby to optimize the projected picture 101.

In the signal processing apparatus of the embodiment, the compensation coefficient selection section (coefficient selection section 200d) may select the posterior degradation compensation coefficient calculated using a plurality of posterior degradation compensation coefficients established with respect to the lens positions.

For example, there may a case where it is possible to acquire the posterior degradation compensation coefficients corresponding to two lens positions, one for allowing the projector to implement 2x zoom mode and the other for enabling the projector to implement 3x zoom mode, but where it is difficult to obtain the posterior degradation compensation coefficient corresponding to the lens position for implementing an intermediate 2.5x zoom mode.

In that case, this configuration permits calculation of the posterior degradation compensation coefficient corresponding to the lens position for implementing 2.5x zoom mode from both the posterior degradation compensation coefficient corresponding to the lens position for implementing 2x zoom mode and the posterior degradation compensation coefficient corresponding to the lens position for implementing 3x zoom mode. The newly calculated posterior degradation compensation coefficient is selected by the compensation coefficient selection section.

In this manner, it is not necessary to provide a configuration capable of acquiring the posterior degradation compensation coefficients corresponding to all lens positions. When a posterior degradation compensation coefficient is acquired as a new intermediate value from a plurality of posterior degradation compensation coefficients, the degradation of the projected picture 101 is suitably compensated.

In particular, in use mode in which a plurality of posterior degradation compensation coefficients corresponding to different lens positions is stored in an internal storage area of the projector 1 or 1A, it is possible to reduce the number of posterior degradation compensation coefficients to be stored. This permits efficient use of the storage area. Further, a reduced storage area contributes to cost reduction.

The signal processing apparatus of the embodiment may include the storage section 172 that stores the posterior degradation compensation coefficients.

When the storage section 172 storing the posterior degradation compensation coefficients is included in the signal processing apparatus, there is no need for the signal processing apparatus to conduct communications to acquire the posterior degradation compensation coefficients. With appropriate posterior degradation compensation coefficients acquired from the storage section 172, the processing is performed smoothly.

The signal processing apparatus of the embodiment may include the test pattern generation section 200a for generating test patterns used to calculate the posterior degradation compensation coefficients.

With the test pattern generation section 200a included, there is no need to acquire test patterns from the outside. For example, consider the case where the projector 1 or 1A equipped with the signal processing apparatus of the embodiment has the posterior degradation compensation coefficients calculated beforehand at the factory or at the installation site and stored in the storage section. That is, adjustment steps are provided in which the posterior degradation compensation coefficients are calculated and stored prior to actual operation. In such a case, having the test pattern generation section 200a included in the projector 1 or 1A eliminates the need for an external terminal in the adjustment steps at the factory or at the installation site. That is, the adjustment steps are simplified.

In the signal processing apparatus of the embodiment, the test pattern may be a picture pattern in which only one pixel is lit.

The work of projecting the picture pattern in which only one pixel is lit may be performed as many times as the number of pixels in the picture, the lit pixel being changed every time. This makes it possible to acquire the posterior degradation compensation coefficients for implementing the most powerful correction process. Such a procedure is effective, for example, in the case where an extended time can be allocated to the work of acquiring posterior degradation compensation coefficients in the adjustment steps.

In the signal processing apparatus of the embodiment, the test pattern may be a picture pattern in which a predetermined proportion of the pixels are lit starting from the outer circumference of the projected picture 101.

For example, as explained above with reference to FIG. 12, a plurality of test patterns in which different predetermined proportions of the pixels are lit starting from the outer circumference may be generated and projected. This makes it possible to simplify the calculation of the above-described transfer function H(X).

In the signal processing apparatus of the embodiment, the compensation coefficient application section (posterior degradation compensation calculation section 200c) may apply the posterior degradation compensation coefficient calculated using a linear first approximation equation based on the distance ($d_{i,j}$) between the scatter source pixel px(j) originating scattered light and the scatter destination pixel px(i) affected by the scattered light.

As explained above in conjunction with the example of "simplifying the calculation of the transfer function H(X)," handling the 4K picture (with 2,160 pixels in the vertical direction and 3,840 pixels in the horizontal direction) requires projecting and imaging the test pattern approximately 8 million times. On the other hand, using the above-mentioned linear first approximation equation makes it possible to project and image at least three test patterns for calculating the posterior degradation compensation coefficients.

This in turn makes it possible to drastically shorten the time required to calculate the posterior degradation compensation coefficients. For example, in the case where the posterior degradation compensation coefficients are calculated beforehand in the adjustment steps, the time required to perform the adjustment steps is shortened, which contributes to cost reduction.

In the signal processing apparatus of the embodiment, the compensation coefficient application section (posterior degradation compensation calculation section 200c) may apply the posterior degradation compensation coefficient calculated by measuring the luminance value of a specific region (target sub-region), instead of the posterior degradation compensation coefficient calculated by measuring the luminance values of all pixels included in the projected picture 101.

In the above example of "calculating the transfer function H(X)" explained with reference to FIG. 7, it is necessary to measure the luminance values of all pixels. That is, with the 4K picture, the luminance value needs to be measured approximately 8 million times.

On the other hand, in the above example of "simplifying the calculation of the transfer function H(X)," an average of the luminance values of each target region C is calculated to obtain the transfer function H(X). That is, it is conceivably possible also to calculate, using the simplifying method, the posterior degradation compensation coefficients that can be derived from the transfer function H(X).

Thus, the adjustment steps can be shortened in the case where the posterior degradation compensation coefficients are calculated in these steps.

In the signal processing apparatus of the embodiment, the compensation coefficient application section (posterior degradation compensation calculation section 200c) may divide one frame of the picture input signal (picture signal PS) into units of a sub-region including a plurality of pixels in the projected picture, the compensation coefficient application section further applying the corresponding posterior degradation compensation coefficient to each of the sub-regions.

This makes it possible to calculate the corrected picture signal PS' by performing the product-sum operation on the 4K picture approximately 25 times instead of the usually required approximately 8 million times, as explained above in conjunction with the example of "simplifying the application of the posterior degradation compensation function to the picture signal."

That is, in the case where the signal processing apparatus is used to project the picture signal PS as the projected picture 101, the processing load on the arithmetic section 171 is alleviated. This reduces generation of heat from the arithmetic section 171.

In the case where a frame update is carried out a large number of times per second, the amount of calculation for obtaining the corrected picture signal PS' is increased. In some cases, the number of times the frame update is performed per second is required to be limited depending on the amount of calculation.

In such cases, the limit on the frame update count can still be reduced by simplifying the application of the posterior degradation compensation function to the picture signal using this configuration.

The signal processing apparatus of the embodiment may include the picture projection section (projection section 200b) so as to function as the projector apparatus (projector 1 or 1A).

Furnished with the picture projection section, the signal processing apparatus acts as the projector apparatus that internally performs the process of generating the corrected picture signal PS' at the time of picture projection. That is, the corrected picture signal PS' can be generated without recourse to an external apparatus. With the posterior degradation compensation coefficients stored in an internal storage area of the projector apparatus, there is no need to rely on an external apparatus for the process of acquiring these coefficients. This eliminates the constraints, imposed by use of an external apparatus, on the operating environment of the projector apparatus.

Furthermore, when the imaging apparatus 2 or 2A and the information processing apparatus 3 or 3A are configured with the projector apparatus as depicted in FIG. 2, the projector apparatus alone can take over the projection and imaging of test patterns and the calculation of posterior degradation compensation coefficients. This optimizes the adjustment steps.

With the signal processing apparatus of the embodiment, in the case where X stands for the picture input signal and H(X) denotes the transfer function of the projected picture 101, an inverse function of the transfer function H(X) may be used as the posterior degradation compensation function of which the elements are the posterior degradation compensation coefficients.

When an inverse function of the transfer function H(X) is used as the posterior degradation compensation function whose elements are the posterior degradation compensation coefficients, it is possible to appropriately set the posterior degradation compensation coefficients for compensating the reduction of contrast in the projected picture 101 derived from the picture signal PS.

A program of the embodiment causes the arithmetic section 171 to perform a compensation coefficient application process that applies a posterior degradation compensation coefficient to a picture input signal (picture signal PS) input to a picture projection section (projection section 200b), the posterior degradation compensation coefficient being based on scattered light caused by the picture projection section in a picture projected by the picture projection section.

Also, the program of the embodiment may cause the arithmetic section 171 to perform a coefficient acquisition process that acquires a posterior degradation compensation coefficient for compensating the degradation due to scattered light in the picture 101 projected by the picture projection section (projection section 200b), the scattered light being caused by the picture projection section, the program further causing the arithmetic section 171 to perform a compensation coefficient application process that applies the posterior degradation compensation coefficient to the picture input signal (picture signal PS) input to the picture projection section that in turn outputs projection light.

That is, the program causes the arithmetic section 171 to perform the processes of steps S201 to S211 in FIG. 10. These processes may be replaced with those explained above in connection with the simplification of application of the posterior degradation compensation function to the picture signal.

Such a program makes it easy to implement the above-described signal processing apparatus 11.

Such a program may be stored beforehand on an HDD as a storage medium incorporated in equipment such as a computer apparatus, or in a ROM in a microcomputer furnished with a CPU. Alternatively, the program may be held (stored) temporarily or permanently on removable recording media such as a semiconductor memory, a memory card, an optical disk, a magneto-optical disk, or a magnetic disk. Such removable storage media may be offered as what is called packaged software.

Besides being installed from the removable storage media into a personal computer, for example, the program may be downloaded from a download site via networks such as a LAN or the Internet.

The advantageous effects stated in this description are only examples and are not limitative of the present technology. There may be additional advantageous effects derived from this description.

<8. The present technology>

The present technology may be implemented preferably in the following configurations:

(1) A signal processing apparatus including:
a compensation coefficient application section configured to apply a posterior degradation compensation coefficient to a picture input signal input to a picture projection section, the posterior degradation compensation coefficient being based on scattered light caused by the picture projection section in a picture projected by the picture projection section.

(2) The signal processing apparatus according to (1) above, further including:
a compensation coefficient selection section configured to select the posterior degradation compensation coefficient applied by the compensation coefficient application section in accordance with the positions of lenses provided in the picture projection section, the lens positions determining a zoom mode, a shift mode, and a focus mode with respect to the projected picture.

(3) The signal processing apparatus according to (2) above, in which the compensation coefficient selection section selects a posterior degradation compensation coefficient calculated using a plurality of the posterior degradation compensation coefficients established in accordance with the lens positions.

(4) The signal processing apparatus according to any one of (1) to (3) above, further including:
a storage section configured to store the posterior degradation compensation coefficient.

(5) The signal processing apparatus according to any one of (1) to (4) above, further including
a test pattern generation section configured to generate a test pattern for calculating the posterior degradation compensation coefficient.

(6) The signal processing apparatus according to (5) above, in which the test pattern is a picture pattern in which only one pixel is lit.

(7) The signal processing apparatus according to (6) above, in which the test pattern is a picture pattern in which a predetermined proportion of pixels are lit in the projected picture starting from an outer circumference of the projected picture.

(8) The signal processing apparatus according to any one of (1) to (7) above, in which the compensation coefficient application section applies the posterior degradation compensation coefficient calculated using a linear first approximation equation based on a distance between a scatter source pixel originating the scattered light and a scatter destination pixel affected by the scattered light.

(9) The signal processing apparatus according to any one of (1) to (8) above, in which the compensation coefficient application section applies the posterior degradation compensation coefficient calculated by measuring a luminance value of a specific region instead of the posterior degradation compensation coefficient calculated by measuring luminance values of all pixels included in the projected picture.

(10) The signal processing apparatus according to any one of (1) to (9) above, in which the compensation coefficient application section divides one frame of the picture input signal into units of a sub-region including a plurality of pixels in the projected picture, the compensation coefficient application section further applying the corresponding posterior degradation compensation coefficient to each of the sub-regions.

(11) The signal processing apparatus according to any one of (1) to (10) above, further including:
the picture projection section so as to function as a projector apparatus.

(12) The signal processing apparatus according to any one of (1) to (11) above in which, in a case where X stands for the picture input signal and H(X) denotes a transfer function of the projected picture, an inverse function of the transfer function H(X) is used as a posterior degradation compensation function whose elements are the posterior degradation compensation coefficients.

(13) The signal processing apparatus according to any one of (1) to (12) above, further including:
a coefficient acquisition section configured to acquire the posterior degradation compensation coefficient.

(14) An information processing method including:
causing an information processing apparatus to perform a compensation coefficient application procedure that applies a posterior degradation compensation coefficient to a picture input signal input to a picture projection section, the posterior degradation compensation coefficient being based on scattered light caused by the picture projection section in a picture projected by the picture projection section.

(15) A program for causing an information processing apparatus to perform:
a compensation coefficient application process of applying a posterior degradation compensation coefficient to a picture input signal input to a picture projection section, the posterior degradation compensation coefficient being based on scattered light caused by the picture projection section in a picture projected by the picture projection section.

[Reference Signs List]

1, 1A Projector, 2, 2A Imaging apparatus, 3, 3A Information processing apparatus, 10 Projection optical system, 10a Light source, 10b Panel, 10c Projection lens, 11 Signal processing section, 101 Projected picture, 172 Storage section, 200 Projector section, 200a Test pattern generation section, 200b Projection section, 200c Posterior degradation compensation calculation section, 200d Coefficient selection section

## Claims

1. A signal processing apparatus comprising:
a compensation coefficient application section configured to apply a posterior degradation compensation coefficient to a picture input signal input to a picture projection section, the posterior degradation compensation coefficient being based on scattered light caused by the picture projection section in a picture projected by the picture projection section.

2. The signal processing apparatus according to claim 1, further comprising:
a compensation coefficient selection section configured to select the posterior degradation compensation coefficient applied by the compensation coefficient application section in accordance with the positions of lenses provided in the picture projection section, the lens positions determining a zoom mode, a shift mode, and a focus mode with respect to the projected picture.

3. The signal processing apparatus according to claim 2, wherein the compensation coefficient selection section selects a posterior degradation compensation coefficient calculated using a plurality of the posterior degradation compensation coefficients established in accordance with the lens positions.

4. The signal processing apparatus according to claim 1, further comprising:
a storage section configured to store the posterior degradation compensation coefficient.

5. The signal processing apparatus according to claim 1, further comprising:
a test pattern generation section configured to generate a test pattern for calculating the posterior degradation compensation coefficient.

6. The signal processing apparatus according to claim 5, wherein the test pattern is a picture pattern in which only one pixel is lit.

7. The signal processing apparatus according to claim 5, wherein the test pattern is a picture pattern in which a predetermined proportion of pixels are lit in the projected picture starting from an outer circumference of the projected picture.

8. The signal processing apparatus according to claim 1, wherein the compensation coefficient application section applies the posterior degradation compensation coefficient calculated using a linear first approximation equation based on a distance between a scatter source pixel originating the scattered light and a scatter destination pixel affected by the scattered light.

9. The signal processing apparatus according to claim 1, wherein the compensation coefficient application section applies the posterior degradation compensation coefficient calculated by measuring a luminance value of a specific region instead of the posterior degradation compensation coefficient calculated by measuring luminance values of all pixels included in the projected picture.

10. The signal processing apparatus according to claim 1, wherein the compensation coefficient application section divides one frame of the picture input signal into units of a sub-region including a plurality of pixels in the projected picture, the compensation coefficient application section further applying the corresponding posterior degradation compensation coefficient to each of the sub-regions.

11. The signal processing apparatus according to claim 1, further comprising:
the picture projection section that functions as a projector apparatus.

12. The signal processing apparatus according to claim 1, wherein, in a case where X stands for the picture input signal and H(X) denotes a transfer function of the projected picture, an inverse function of the transfer function H(X) is used as a posterior degradation compensation function whose elements are the posterior degradation compensation coefficients.

13. The signal processing apparatus according to claim 1, further comprising:
a coefficient acquisition section configured to acquire the posterior degradation compensation coefficient.

14. An information processing method comprising:
causing an information processing apparatus to perform a compensation coefficient application procedure that applies a posterior degradation compensation coefficient to a picture input signal input to a picture projection section, the posterior degradation compensation coefficient being based on scattered light caused by the picture projection section in a picture projected by the picture projection section.

15. A program for causing an information processing apparatus to perform:
a compensation coefficient application process of applying a posterior degradation compensation coefficient to a picture input signal input to a picture projection section, the posterior degradation compensation coefficient being based on scattered light caused by the picture projection section in a picture projected by the picture projection section.

# FIG.1

# F I G . 2

100

101

PROJECTION
OPTICAL
SYSTEM

IMAGING
APPARATUS

2A

10

SIGNAL
PROCESSING
SECTION

INFORMATION
PROCESSING
APPARATUS

3A

11

1A

PS

# FIG.3

## A

CPU — 151

ROM — 152

RAM — 153

154

155 — INPUT/OUTPUT INTERFACE

DISPLAY — 156

INPUT SECTION — 157

SPEAKERS — 158

STORAGE SECTION — 159

COMMUNICATION SECTION — 160

DRIVE — 161

MEMORY CARD — 162

3

## B

ARITHMETIC SECTION — 171

STORAGE SECTION — 172

INPUT/OUTPUT INTERFACE — 173

11

24

# FIG.4

ORIGINAL PICTURE X    DIRECT LIGHT A(X)

A

LIGHT SOURCE

PANEL

10c (PROJECTION LENS)

SCREEN

10a          10b          100

SCATTERED LIGHT B(X)

B

LIGHT SOURCE

PANEL

10c (PROJECTION LENS)

SCREEN

10a          10b          100

DIRECT LIGHT A(X) + SCATTERED LIGHT B(X)

C

LIGHT SOURCE

PANEL

10c (PROJECTION LENS)

SCREEN

10a          10b          100

101 (PROJECTED PICTURE Y)

# FIG. 5

| PIXEL px(0) | PIXEL px(1) | PIXEL px(2) | PIXEL px(3) | PIXEL px(4) |
|---|---|---|---|---|
| PIXEL px(5) | PIXEL px(6) | PIXEL px(7) | PIXEL px(8) | PIXEL px(9) |
| PIXEL px(10) | PIXEL px(11) | PIXEL px(12) | PIXEL px(13) | PIXEL px(14) |
| PIXEL px(15) | PIXEL px(16) | PIXEL px(17) | PIXEL px(18) | PIXEL px(19) |
| PIXEL px(20) | PIXEL px(21) | PIXEL px(22) | PIXEL px(23) | PIXEL px(24) |

# FIG.6

# FIG.7

START

$j=0$    S101

$j<25$ ?    S102 — N → END

Y

INITIALIZE $x_0$ through $x_{24}$ TO 0    S103

SET 1 TO $x_j$    S104

PROJECT TEST PATTERN OF $x_0$ THROUGH $x_{24}$    S105

IMAGE PROJECTED PICTURE AND ACQUIRE LUMINANCE VALUE THEREOF    S106

$i=0$    S107

$i=j$ ?    S108 — N → $\omega_{i,j}=y_i$    S109

Y

$\omega_{i,i}=0$    S110

$i++$    S111

$i<25$ ?    S112 — Y

N

SET AVERAGE OF ADJACENT PIXELS TO $\omega_{i,j}$    S113

$\xi_{j,j}=y_j-\omega_{j,j}$    S114

$j++$    S115

28

# FIG.8

202 —

COEFFICIENTS
$\xi$ OF DIRECT
LIGHT

COEFFICIENTS $\omega$
OF SCATTERED
LIGHT

— 202

POSTERIOR DEGRADATION
COMPENSATION COEFFICIENT
CALCULATION SECTION

— 300a

— 300

POSTERIOR
DEGRADATION
COMPENSATION
COEFFICIENTS w

300b

CALCULATION PROCESSING SECTION

# FIG.9

100

101

PROJECTION
SECTION
200b

PROJECTOR SECTION
200

200c

200d

POSTERIOR DEGRADATION
COMPENSATION
CALCULATION SECTION

COEFFICIENT
SELECTION
SECTION

PS

300b

POSTERIOR DEGRADATION
COMPENSATION
COEFFICIENTS w

# FIG.10

START

ACQUIRE POSTERIOR DEGRADATION COMPENSATION COEFFICIENT $w_{i,j}$  S201

ACQUIRE EACH PIXEL ELEMENT OF PICTURE SIGNAL PS  S202

m=0  S203

m<25 ?  S204

sum=0  S205

n=0  S206

$sum=sum+w_{m,n} \times x_n$  S207

n++  S208

n<25 ?  S209

$x_m'=sum$  S210

m++  S211

PERFORM PROJECTION PROCESS BASED ON CORRECTED PICTURE SIGNAL PS'  S212

END

# FIG.11

# FIG.12

<TEST PATTERN TP1> — TARGET REGION C — 100%

<TEST PATTERN TP2> — TARGET REGION C — 90% — 10%

<TEST PATTERN TP3> — 80% — TARGET REGION C — 20%

<TEST PATTERN TP4> — 70% — TARGET REGION C — 30%

<TEST PATTERN TP10> — 10% — TARGET REGION C — 90%

# FIG.13

## A

ORIGINAL PICTURE

## B

SUB-REGION (REDUCED PICTURE S(0))

| | | | | |
|---|---|---|---|---|
| 0 | 1 | 2 | 3 | 4 |
| 5 | 6 | 7 | 8 | 9 |
| 10 | 11 | 12 | 13 | 14 |
| 15 | 16 | 17 | 18 | 19 |
| 20 | 21 | 22 | 23 | 24 |

SUB-REGION (REDUCED PICTURE S(24))

## INTERNATIONAL SEARCH REPORT

| International application No. |
| --- |
| PCT/JP2019/001067 |

**A. CLASSIFICATION OF SUBJECT MATTER**
Int. Cl. H04N5/74(2006.01)i, G03B21/14(2006.01)i, G09G5/00(2006.01)i, G09G5/10(2006.01)i

According to International Patent Classification (IPC) or to both national classification and IPC

**B. FIELDS SEARCHED**

Minimum documentation searched (classification system followed by classification symbols)
Int. Cl. H04N5/74, H04N9/31, G03B21/00, G09G5/00

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2009-042838 A (RICOH CO., LTD.) 26 February 2009, paragraphs [0017]-[0023], [0040], fig. 1 & | 1-4, 11-12, 13-15 |
| Y | US 2009/0040398 A1, paragraphs [0036]-[0040], | 2-3, 5-6, 8-10 |
| A | [0061], fig. 1 & EP 2026587 A2 & CN 101364033 A | 7 |
| X | JP 2015-088946 A (JVC KENWOOD CORP.) 07 May 2015, | 1, 4, 11-15 |
| Y | paragraphs [0038]-[0063], fig. 1-8 & US | 2-3, 5-6, 8-10 |
| A | 2016/0241826 A1, paragraphs [0047]-[0075], fig. 1-8 & WO 2015/064510 A1 & EP 3065399 A1 | 7 |
| Y | WO 2016/157671 A1 (SONY CORP.) 06 October 2016, paragraphs [0043]-[0045], [0099], fig. 6 & US 2018/0082406 A1, paragraphs [0082]-[0084], [0138], fig. 6 | 5-6, 9-10 |

☒ Further documents are listed in the continuation of Box C.       ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 14.03.2019 | 26.03.2019 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

<div align="center">

**INTERNATIONAL SEARCH REPORT**

</div>

| | International application No. |
|---|---|
| | PCT/JP2019/001067 |

**C (Continuation).   DOCUMENTS CONSIDERED TO BE RELEVANT**

| Category* | Citation of document, with indication, where appropriate, of the relevant passages | Relevant to claim No. |
|---|---|---|
| Y | JP 2005-352171 A (SONY CORP.) 22 December 2005, paragraphs [0085]-[0087] (Family: none) | 5-6 |
| Y | JP 2011-023549 A (FUJITSU SEMICONDUCTOR LTD.) 03 February 2011, paragraph [0023] (Family: none) | 8 |
| Y | WO 2016/075744 A1 (HITACHI MAXELL, LTD.) 19 May 2016, paragraph [0096] & US 2017/0318270 A1, paragraph [0110] & CN 107079127 A | 2-3 |
| Y | WO 2011/158498 A1 (PANASONIC CORP.) 22 December 2011, paragraph [0054] & US 2012/0200673 A1, paragraph [0066] & EP 2584309 A1 & CN 102472619 A | 2-3 |
| Y | JP 2016-081431 A (CANON INC.) 16 May 2016, paragraph [0048] & US 2016/0110851 A1, paragraph [0067] & EP 3012802 A1 & CN 105530407 A | 2-3 |

Form PCT/ISA/210 (continuation of second sheet) (January 2015)

**EP 3 780 585 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004032207 A

37